# EUROPEAN PATENT SPECIFICATION

(11) **EP 0 418 036 B1**
(45) Date of publication and mention of the grant of the patent: **30.10.1996**
(21) Application number: 90309944.8
(22) Date of filing: 11.09.1990
(51) Int. Cl.: H04B 1/16

(54) **Audible noise reducing**
Reduktion von hörbarem Rauschen
Réduction du bruit audible

(30) Priority: 11.09.1989 US 405359
(43) Date of publication of application: 20.03.1991
(73) Proprietor: BOSE CORPORATION, Framingham, Massachusetts 01701 (US)
(72) Inventor: Short, William R., Ashland, Massachusetts 01721 (US)
(74) Representative: Brunner, Michael John

(56) References cited:
- EP-A- 0 304 923
- DE-C- 3 721 918
- PATENT ABSTRACTS OF JAPAN vol. 8, no. 25 (E-225)(1642) 2 February 1984 & JP-A- 58 187 100 ( NIPPON GAKKI SEIZO ) 1 November 1983
- * the whole document *

## Description

The present invention relates in general to audible noise reducing in stereo broadcasts characterized by improved audible noise reduction not only in weak sigral areas, but also under strong signal conditions, such as occur in the presence of multipath transmission without reducing stereo separation to the extent that occurs with conventional blending circuits.

In conventional FM stereo broadcasting the sum of left and right audio signals modulate the main carrier sigral to provide a compatible monophonic audio signal. The difference between the left and right audio signals modulates a 38 kHz subcarrier to create a double sideband suppressed carrier signal that also modulates the carrier along with a 19 kHz pilot carrier used in the receiver to detect the difference signal.

In the receiver the sum of the monophonic signal and the difference signal provide the left signal and the difference provides the right signal.

Noise added to the RF signal during transmission and in the receiver causes added noise at the FM detector output of the receiver with a spectrum that rises with frequency. Thus, the low frequency (under 15 kHz) monophonic signal is much less affected by noise than the high frequency (23-53 kHz) difference signal channel. Therefore, noise in the difference channel produces most of the audible noise at the output of a stereo receiver.

Typical FM stereo receivers, especially those used in mobile applications, include a blend circuit that reduces the level of the difference channel audio signal as audible noise increases. Although this circuitry reduces audible noise, it also reduces stereo separation. Typically this circuitry reduces gain in the difference signal channel as received RF level decreases. Above a certain RF level, the difference channel gain does not change. Below that RF level, the difference signal channel gain decreases to reduce the audible noise. Below a still lower RF level, the difference signal channel gain is zero, resulting in monophonic reproduction of the stereo broadcast. Thus, the perceived audible noise level remains substantially constant during this transmission. However, stereo separation regressively decreases. Other criteria for controlling the gain of the difference signal channel may also be used. It is recognised that out-of-band noise; that is, noise at the FM detector output having spectral components above 100 KHz, is a good indicator of multipath conditions. A paper entitled "A Theoretical and Experimental Study of Noise and Distortion in the Reception of FM Signals" by Amar G. Bose and William L. Short, MIT Research Laboratory of Electronics Technical Report No. 540, demonstrates that multipath transmission causes greater noise and distortion in the higher frequency difference signal channel than in the audio monophonic channel. Thus, reducing gain in the difference signal channel upon sensing an increase in out-of-band noise may reduce the audible effect of multipath transmission, but at the expense of reduced stereo separation. Furthermore, the system may transmit noise that is audible because there is no audio signal of sufficient intensity to mask the noise.

JP-A-58-187100 discloses an audible noise reduction apparatus with a variable bandwidth low pass filter so that reduction is performed, only for signals with a low S/N ratio, based on the L+R signal.

According to the present invention, there is provided apparatus for reducing audible noise in a stereo receiver, the apparatus comprising:
a stereo demodulator having a monophonic signal output and a difference signal output;
a left signal combiner and a right signal combiner;
a first variable cutoff frequency filter with a control signal input and having a controllable variable cutoff frequency intercoupling the difference signal output with the left and right combiners; and
a control signal generator having a control signal output coupled to the control signal input of the first variable cutoff frequency filter, the control signal generator having a level detector; characterised in that said level detector is arranged to receive the difference signal from the difference signal output to provide an audio signal spectral content level signal representative of audio signal spectral content and to produce, on the control input to the first variable cutoff frequency filter when said difference signal indicates that the rf signal then being received by the stereo receiver produces high frequency noise at the difference signal output, a bandwidth-reducing control signal, such that the bandwidth of the first variable cutoff frequency filter and the high frequency noise signal therefrom are reduced so that the levels of the audio signal spectral components exceed the levels of the noise spectral components.

The cutoff frequency of the low pass filter may be adjusted in accordance with one or more parameters to provide a cutoff frequency control signal applied to the low pass filter to control the cutoff frequency. According to one aspect of the invention cutoff frequency may be set in accordance with the detected level of the RF signal by reducing the cutoff frequency with decreasing RF level.

According to another aspect of the invention, the cutoff frequency may be varied in accordance with the audio spectral components then being broadcast to take advantage of the psychoacoustic phenomenon of masking. When an audio signal spectral component is present at higher level than a corresponding noise spectral component, the audio signal masks the noise component, making it inaudible. By controlling the cutoff frequency to the highest frequency at which the audio signal spectral components exceed the levels of noise spectral components, the noise will not be audible. This approach results in considerably higher noise levels present without the noise being audible. The level of audio signal spectral components may be sensed in the monophonic signal channel or the difference signal channel, or combinations thereof. Sensing in the difference channel is preferable.

According to still another aspect of the invention, the cutoff frequency may be varied in accordance with the level of multipath interference, for example by reducing the cutoff frequency with increasing level of out-of-band noise spectral components.

According to an embodiment of the invention, it is advantageous to include an all-pass filter in the monophonic channel with a cutoff frequency corresponding to that of the low pass filter of order and Q the same as that of the low pass filter so that the phase shift introduced by both filters is the same at all audio frequencies to attain reduction of audible noise while maintaining good stereo separation.

The invention has a number of advantages. It reduces audible noise under strong signal conditions and without reducing stereo separation for spectral components within the passband.

Numerous other features and advantages of the invention will become apparent from the following specification when read in connection with the accompanying drawing in which:
FIG. 1 is a block diagram illustrating the logical arrangement of an embodiment of the invention having a low pass filter with variable cutoff frequency in the difference signal channel;
FIG. 2 is a variation of the embodiment of FIG. 1 also including an all-pass filter in the monophonic channel having a variable cutoff frequency;
FIG. 3 is a graphical representation of stereo separation as a function of frequency for a given control voltage for the systems of FIGS. 1 and 2;
FIG. 4 is a block diagram illustrating the logical arrangement of a control signal generator responsive to the out-of-band noise level and the audio spectral content of the detected different signal;
FIG. 5 is a schematic circuit diagram of an exemplary all-pass filter with controlled cutoff frequency;
FIG. 6 is a schematic circuit diagram of an exemplary low-pass filter with controlled cutoff frequency;
FIG. 7 is a schematic circuit diagram of an exemplary combiner;
FIG. 8 is a schematic circuit diagram of an exemplary 100 kHz high pass filter and level detector;
FIG. 9 is a schematic circuit diagram of a 6 kHz high-pass filter and level detector; and
FIG. 10 is a schematic circuit diagram of an exemplary combiner of FIG. 4.

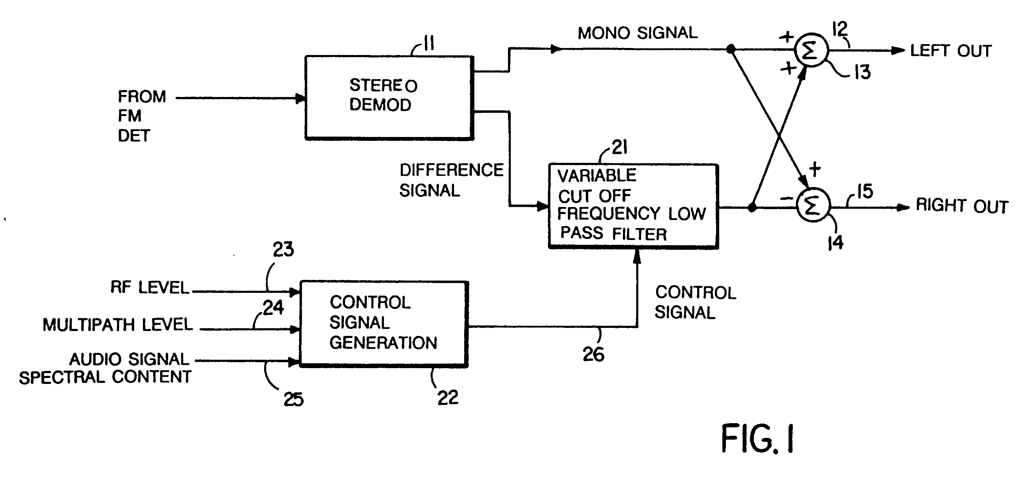

With reference now to the drawing and more particularly FIG. 1 thereof, there is shown a block diagram illustrating the logical arrangement of an embodiment of the invention. The invention includes a conventional stereo demodulator 11, a left combiner 12 that adds the monophonic signal and difference signal to provide the left output signal on line 13 and a right combiner 14 that subtracts the difference signal from the monophonic signal to provide the right output signal on line 15. In addition the invention includes a variable cutoff frequency low pass filter 21 intercoupling the difference signal output of stereo demodulator 11 and left and right combiners 12 and 14. Alternatively, but less preferably, filter 21 could be a high cut shelf filter that may pass spectral components above cutoff, but with significant attenuation. A control signal generator 22 responds to an RF level signal on line 23, a multipath level signal on line 24 and an audio signal spectral content signal on line 25 to provide a control signal on line 26 that is applied to variable cutoff frequency low pass filter 21 to cause the cutoff frequency to decrease with decreasing RF level, increasing multipath level and decreasing audio signal spectral content.

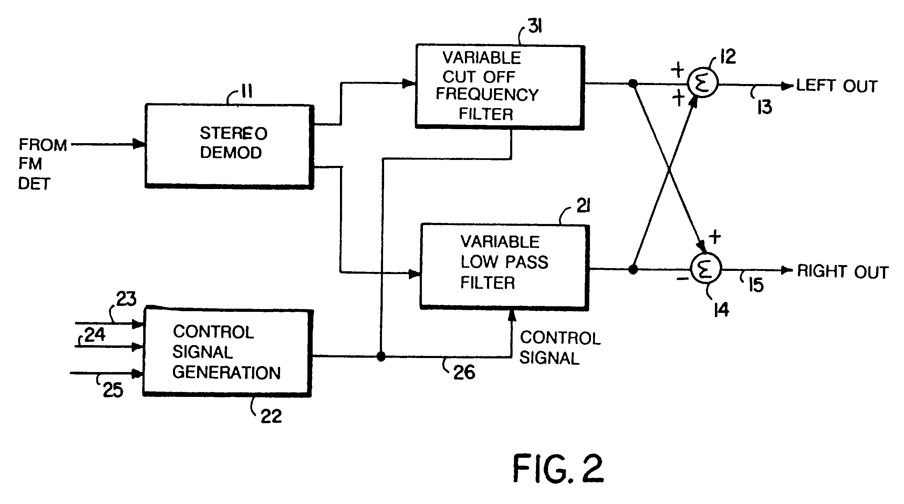

Referring to FIG. 2, there is shown a variation of the embodiment of FIG. 1 in which variable cutoff frequency all-pass filter 31 is connected between the monophonic signal output of stereo demodulator 11 and left and right combiners 12 and 14. Control signal generator 22 controls the cutoff frequencies of all-pass filter 31 and low pass filter 21 to be the same, and both filters are characterized by the same Q and order so that the phase shift introduced by both filters to transmitted spectral components is substantially the same to maintain good stereo separation for the transmitted spectral components.

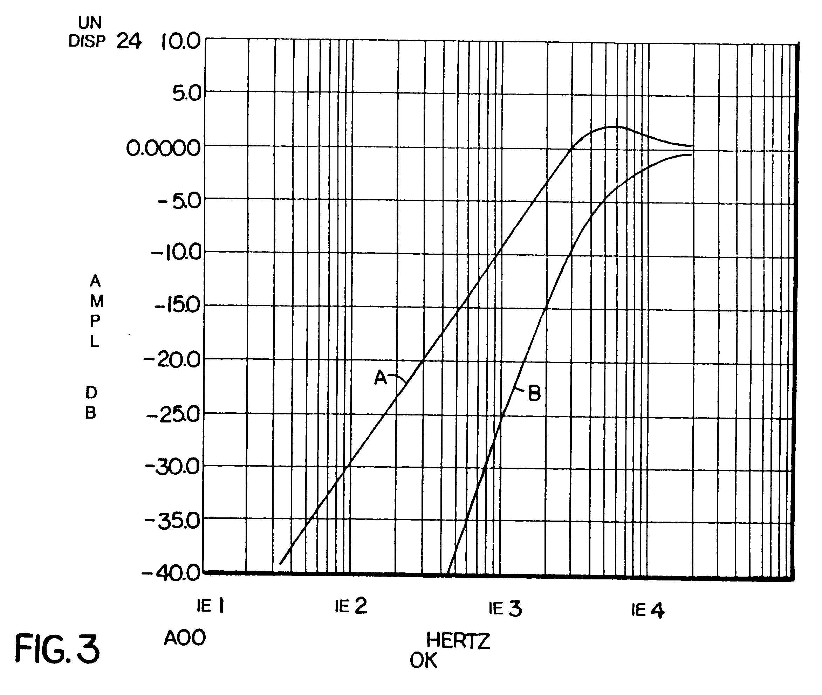

Referring to FIG. 3, there is shown a graphical representation of stereo separation as a function of frequency for a given control voltage by upper curve A and lower curve B for the systems of FIGS. 1 and 2, respectively. This representation demonstrates the improved stereo separation available from the system of FIG. 2.

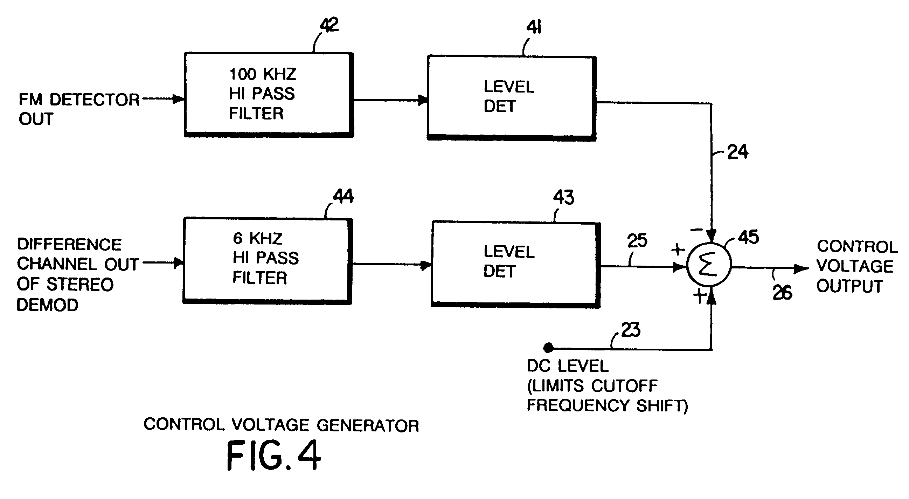

Referring to FIG. 4, there is shown a block diagram illustrating the logical arrangement of a suitable embodiment for control signal generator 22. The multipath level signal on line 24 is at the output of level detector 41 that provides a signal representative of the out-of-band spectral components provided by the FM detector output after transmission through 100 kHz high pass filter 42 having a cutoff frequency at substantially 100 kHz. The DC level on line 23 may correspond to the AGC signal that is representative of RF level. The audio signal spectral content signal on line 25 may be on the output of level detector 43 representative of the difference signal spectral components above 6 kHz after transmission through high pass filter 44 having a cutoff frequency of 6 kHz. Combiner 45 combines these three signals as indicated to provide the control signal on line 26 that increases with increasing RF-level, increasing the spectral components in the difference signal above 6 kHz and decreasing out-of-band spectral components on line 24 to correspondingly increase the filter cutoff frequencies.

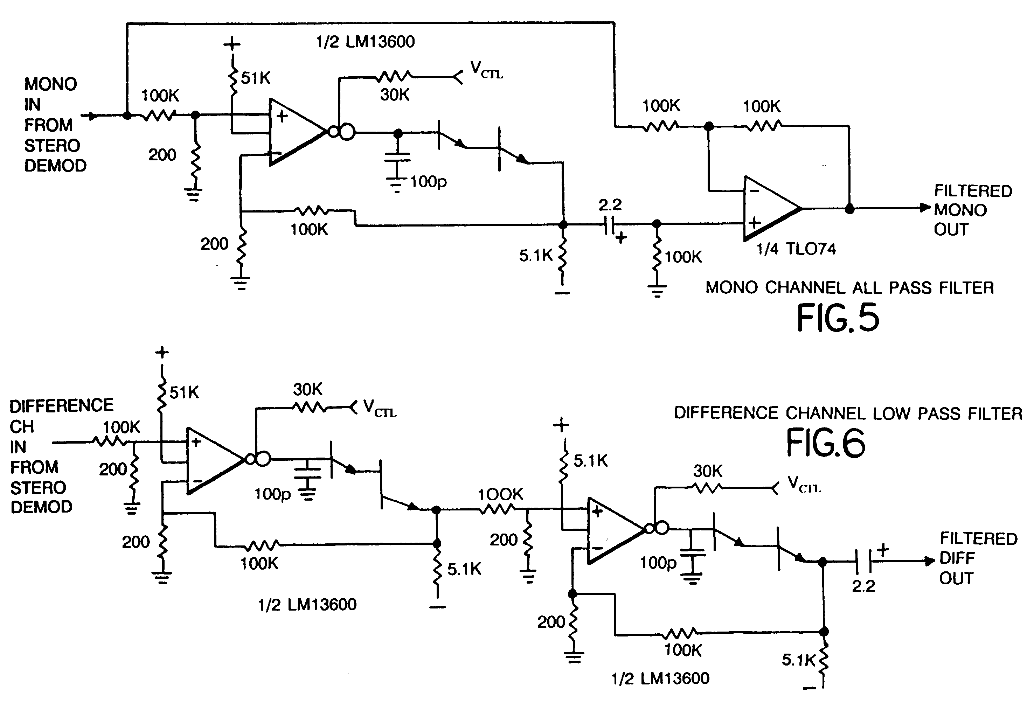

Referring to FIG. 5, there is shown a schematic circuit diagram of an exemplary embodiment of the all-pass filter for the all-pass filter with controlled cutoff frequency.

Referring to FIG. 6, there is shown a schematic circuit diagram of an exemplary embodiment of the difference channel low-pass filter.

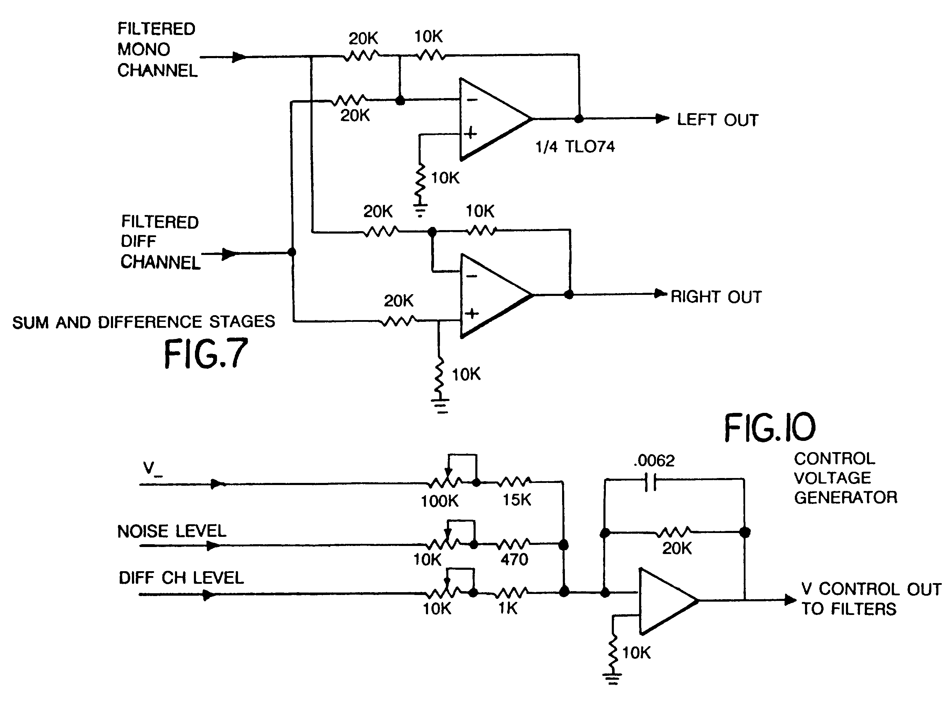

Referring to FIG. 7, there is shown a schematic circuit diagram of an exemplary embodiment of combiners 12 and 14.

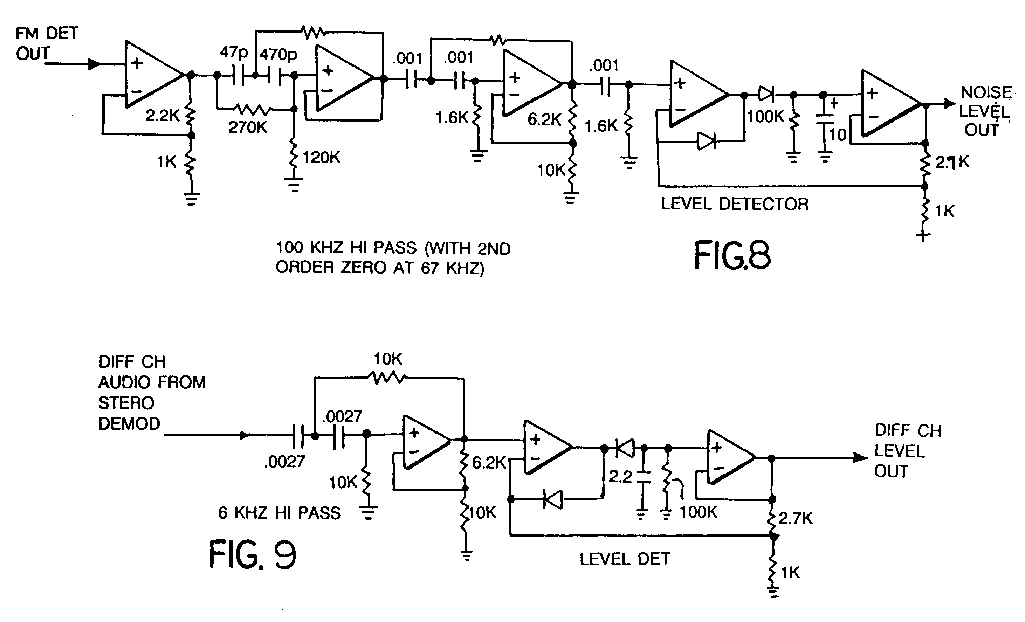

Referring to FIG. 8, there is shown a schematic circuit diagram of an exemplary embodiment of 100 kHz high pass filter 42 and level detector 41.

Referring to FIG. 9, there is shown a schematic circuit diagram of 6 kHz high-pass filter 44 and level detector 43 of FIG. 4.

Referring to FIG. 10, there is shown a schematic circuit diagram of an exemplary embodiment of combiner 45 of FIG. 4.

## Claims

1. Apparatus for reducing audible noise in a stereo receiver, the apparatus comprising:
a stereo demodulator (11) having a monophonic signal output and a difference signal output;
a left signal combiner (12) and a right signal combiner (14);
a first variable cutoff frequency filter (21) with a control signal input (26) and having a controllable variable cutoff frequency intercoupling the difference signal output with the left and right combiners; and
a control signal generator (22) having a control signal output coupled to the control signal input of the first variable cutoff frequency filter (21), the control signal generator (22) having a level detector (43); characterised in that said level detector (43) is arranged to receive the difference signal from the difference signal output to provide an audio signal spectral content level signal representative of audio signal spectral content and to produce, on the control input (26) to the first variable cutoff frequency filter (21) when said difference signal indicates that the rf signal then being received by the stereo receiver produces high frequency noise at the difference signal output, a bandwidth-reducing control signal, such that the bandwidth of the first variable cutoff frequency filter (21) and the high frequency noise signal therefrom are reduced so that the levels of the audio signal spectral components exceed the levels of the noise spectral components.

2. Apparatus according to claim 1 and further comprising:
a second variable cutoff filter (31) intercoupling the monophonic signal output with the left and right combiners (12,14) and having a control signal input coupled to the control signal output of the control signal generator (22).

3. Apparatus according to claim 2, wherein the cutoff frequencies of the first and second variable cutoff filters (21, 31) are substantially the same and the first and second variable cutoff filters (21,31) impart substantially the same phase shift to audio spectral components transmitted therethrough.

4. Apparatus according to claim 1, further comprising an FM detector, wherein the control signal generator (22) comprises:
at least one high pass filter (42,44) with an input and an output; and
at least one level detector (41,43) having an input coupled to the associated high pass filter output and an output coupled to the control signal output (26), the or each high pass filter input coupled to one of the monophonic signal output and the difference signal output.

5. Apparatus according to claim 4, wherein a first of said at least one high pass filters (44) has a cutoff frequency at an audio frequency above 1 kHz and sufficiently low to pass audible noise spectral components, with its input coupled to the difference signal output.

6. Apparatus according to claim 5, wherein a second high pass filter (42) with a cutoff frequency at a radio frequency sufficiently low to pass spectral components characteristic of multipath reception is provided with its input coupled to the monophonic signal output and further comprising: a combiner (45) having at least first and second inputs (24,25) coupled to the respective level detector outputs and an output (26) forming the control signal output.

7. Apparatus according to claim 6, wherein the combiner (45) also has a third input (23) that receives a DC level limiting the control signal on the control voltage output so that the cutoff frequency of the or each variable frequency filter (21,31) remains above a predetermined audio frequency.

8. Apparatus according to claim 2, wherein the second variable cutoff filter (31) is an all-pass filter within the audio frequency band.

9. Apparatus according to claim 3, wherein the first variable cutoff filter (21) is a low pass filter comprising at least one inverting amplifier having an output coupled to an input thereof via at least one emitter follower circuit, the inverting amplifier output receiving the control signal.

10. Apparatus according to claim 9, wherein the second variable cutoff filter (31) comprises an inverting amplifier having an input at its inverted output for receiving the control signal with its inverted output coupled to a second amplifier by an emitter follower circuit.

## Patentansprüche

1. Vorrichtung zur Reduktion von hörbarem Rauschen in einem Stereoempfänger, wobei die Vorrichtung umfaßt:
- einen Stereodemodulator (11) mit einem Monophonsignal-Ausgang und einem Differenzsignal-Ausgang;
- einen Kombinator (12) des linken Signals und einen Kombinator (14) des rechten Signals;
- einen ersten Filter (21) variabler Abschneidefrequenz mit einem Steuersignal-Eingang (26) und mit einer steuerbaren variablen Abschneidefrequenz, das den Differenzsignal-Ausgang mit dem linken und dem rechten Kombinator verschaltet; und
- einen Steuersignalgenerator (22) mit einem Steuersignal-Ausgang, der an den Steuersignal-Eingang des ersten Filters (21) variabler Abschneidefrequenz gekoppelt ist, wobei der Steuersignalgenerator (22) einen Pegeldetektor (43) aufweist;
dadurch gekennzeichnet, daß
- der Pegeldetektor (43) derart ausgelegt ist, das Differenzsignal von dem Differenzsignal-Ausgang zum Bereitstellen eines Pegelsignals des Spektralinhalts des Audiosignals zu empfangen, das den Spektralinhalt des Audiosignals darstellt, und, wenn das Differenzsignal angibt, daß das dann von dem Stereoempfänger zu empfangende Radiofrequenz-Signal ein hochfrequentes Rauschen an dem Differenzsignal-Ausgang erzeugt, ein bandbreitenreduzierendes Steuersignal an dem Steuereingang (26) zu dem ersten Filter (21) variabler Abschneidefrequenz derart erzeugt, daß die Bandbreite des ersten Filters (21) variabler Abschneidefrequenz und dessen hochfrequentes Rauschsignal vermindert werden, so daß die Pegel der Spektralkomponenten des Audiosignals die Pegel der Spektralkomponenten des Rauschens überschreiten.

2. Vorrichtung nach Anspruch 1, ferner mit einem zweiten variablen Trennfilter (31) das den Monophonsignal-Ausgang mit dem linken und dem rechten Kombinator (12, 14) verschaltet und einen Steuersignal-Eingang aufweist, der an den Steuersignal-Ausgang des Steuersignalgenerators (22) gekoppelt ist.

3. Vorrichtung nach Anspruch 2, bei welcher die Abschneidefrequenzen des ersten und des zweiten variablen Trennfilters (21, 31) im wesentlichen dieselben sind und das erste und das zweite variable Trennfilter (21, 31) im wesentlichen dieselbe Phasenverschiebung an die dort hindurch übertragenen Audio-Spektralkomponenten vermittelt.

4. Vorrichtung nach Anspruch 1 mit ferner einem FM-Detektor, wobei der Steuersignalgenerator (22) aufweist:
- wenigstens einen Hochpaßfilter (42, 44) mit einem Eingang und einem Ausgang; und
- wenigstens einen Pegeldetektor (41, 43) mit einem an den Ausgang des zugehörigen Hochpaßfilters gekoppelten Eingang und einen an den Steuersignal-Ausgang (26) gekoppelten Ausgang, wobei der oder jeder Hochpaßfilter-Eingang entweder an den Monophonsignal-Ausgang oder den Differenzsignal-Ausgang gekoppelt ist.

5. Vorrichtung nach Anspruch 4, bei welcher ein erster des wenigstens einen Hochpaßfilters (44) eine Abschneidefrequenz bei einer Audiofrequenz oberhalb 1 kHz hat und die ausreichend niedrig ist, um Spektralkomponenten des hörbaren Rauschens durchzulassen, dessen Eingang mit dem Differenzsignal-Ausgang gekoppelt ist.

6. Vorrichtung nach Anspruch 5, bei welcher ein zweiter Hochpaßfilter (42) mit einer Abschneidefrequenz bei einer ausreichend niedrigen Radiofrequenz zum Durchlassen von Spektralkomponenten vorgesehen ist, die charakteristisch für einen Mehrweg-Empfang sind, wobei dessen Eingang an den Monophonsignal-Ausgang gekoppelt ist, und die ferner aufweist: einen Kombinator (45) mit wenigstens ersten und zweiten Eingängen (24, 25), die an die entsprechenden Pegeldetektor-Ausgänge gekoppelt sind, und mit einem Ausgang (26), der den Steuersignal-Ausgang ausbildet.

7. Vorrichtung nach Anspruch 6, bei welcher der Kombinator (45) ferner einen dritten Eingang (23) aufweist, der einen Gleichspannungspegel zum Begrenzen des Steuersignals an dem Steuerspannungs-Ausgang empfängt, so daß die Abschneidefrequenz des oder jedes Filters (21, 31) variabler Frequenz oberhalb einer vorgegebenen Audiofrequenz verbleibt.

8. Vorrichtung nach Anspruch 2, bei welcher der zweite variable Trennfilter (31) ein Allpaßfilter innerhalb des Audiofrequenzbandes ist.

9. Vorrichtung nach Anspruch 3, bei welcher der erste variable Trennfilter (21) ein Tiefpaßfilter ist, der wenigstens einen invertierenden Verstärker mit einem Ausgang aufweist, der an dessen Eingang über wenigstens eine Emitter-Verstärkerschaltung gekoppelt ist, wobei der Ausgang des invertierenden Verstärkers das Steuersignal empfängt.

10. Vorrichtung nach Anspruch 9, bei welcher das zweite variable Trennfilter (31) einen invertierenden Verstärker mit einem Eingang an seinem invertierten Ausgang zum Empfangen des Steuersignals aufweist, wobei dessen invertierter Ausgang an einen zweiten Verstärker über eine Emitter-Verstärkerschaltung gekoppelt ist.

## Revendications

1. Appareil pour réduire le bruit audible dans un récepteur stéréo, l'appareil comprenant :
- un démodulateur stéréo (11) comportant une sortie de signal monophonique et une sortie de signal de différence ;
- un combinateur de signal de gauche (12) et un combinateur de signal de droite (14)
- un premier filtre à fréquence de coupure variable (21) muni d'une entrée de signal de commande (26) et présentant une fréquence de coupure variable contrôlable, intercouplant la sortie de signal de différence avec les combinateurs de gauche et de droite ; et
- un générateur de signal de commande (22) comportant une sortie de signal de commande couplée à l'entrée de signal de commande du premier filtre à fréquence de coupure variable (21), le générateur de signal de commande (22) comportant un détecteur de niveau (43) ; caractérisé en ce que le détecteur de niveau (43) est monté pour recevoir le signal de différence provenant de la sortie de signal de différence afin de fournir un signal de niveau de contenu spectral de signal audio représentatif du contenu spectral de signal audio, et de produire, à l'entrée de commande (26) du premier filtre à fréquence de coupure variable (21), lorsque le signal de différence indique que le signal radiofréquence alors reçu par le récepteur stéréo produit du bruit haute fréquence à la sortie du signal de différence, un signal de commande de réduction de largeur de bande, de façon que la largeur de bande du premier filtre à fréquence de coupure variable (21) et le signal de bruit haute fréquence provenant de celui-ci, soient réduits pour que les niveaux des composantes spectrales de signal audio dépassent les niveaux des composantes spectrales de bruit.

2. Appareil selon la revendication 1, caractérisé en ce qu'il comprend en outre un second filtre à fréquence de coupure variable (31) intercouplant la sortie de signal monophonique avec les combinateurs de gauche et de droite (12, 14), et comportant une entrée de signal de commande couplée à la sortie de signal de commande du générateur de signal de commande (22).

3. Appareil selon la revendication 2, caractérisé en ce que les fréquences de coupure du premier et du second filtre à fréquence de coupure variable (21, 31) sont essentiellement les mêmes, et en ce que le premier et le second filtre à fréquence de coupure variable (21, 31) communiquent essentiellement le même déphasage aux composantes spectrales audio transmises à travers ceux-ci.

4. Appareil selon la revendication 1, caractérisé en ce qu'il comprend en outre un détecteur F.M., dans lequel le générateur de signal de commande (22) comprend :
au moins un filtre passe-haut (42, 44) avec une entrée et une sortie ; et
au moins un détecteur de niveau (41, 43) comportant une entrée couplée à la sortie du filtre passe-haut associé, et une sortie couplée à la sortie de signal de commande (26), l'entrée ou chaque entrée du filtre passe-haut étant couplée à l'une de la sortie de signal monophonique et de la sortie de signal de différence.

5. Appareil selon la revendication 4, caractérisé en ce qu'un premier des filtres passe-haut au moins unique (44) présente une fréquence de coupure à une fréquence audio au-dessus de 1 kHz et suffisamment basse pour laisser passer les composantes spectrales de bruit audibles, son entrée étant couplée à la sortie de signal de différence.

6. Appareil selon la revendication 5, caractérisé en ce qu'un second filtre passe-haut (42) présentant une fréquence de coupure à une fréquence radio suffisamment basse pour laisser passer les composantes spectrales caractéristiques d'une réception à chemins multiples, est utilisé avec son entrée couplée à la sortie de signal monophonique, et comprenant en outre un combinateur (45) comportant au moins une première entrée et une seconde entrée (24, 25) couplées aux sorties de détecteur de niveau respectives, et une sortie (26) formant la sortie de signal de commande.

7. Appareil selon la revendication 6, caractérisé en ce que le combinateur (45) comprend également une troisième entrée (23) qui reçoit un niveau de tension continue limitant le signal de commande sur la sortie de tension de commande, de façon que la fréquence de coupure du filtre ou de chaque filtre à fréquence variable (21, 31) reste au-dessus d'une fréquence audio prédéterminée.

8. Appareil selon la revendication 2, caractérisé en ce que le second filtre à fréquence de coupure variable (31) est un filtre passe-tout à l'intérieur de la bande de fréquence audio.

9. Appareil selon la revendication 3, caractérisé en ce que le premier filtre à fréquence de coupure variable (21) est un filtre passe-bas comprenant au moins un amplificateur inverseur muni d'une sortie couplée à une entrée de celui-ci par au moins un circuit à émetteur suiveur, la sortie de l'amplificateur inverseur recevant le signal de commande.

10. Appareil selon la revendication 9, caractérisé en ce que le second filtre à fréquence de coupure variable (31) comprend un amplificateur inverseur muni, à sa sortie inversée, d'une entrée destinée à recevoir le signal de commande, sa sortie inversée étant couplée à un second amplificateur par un circuit à émetteur suiveur.
